# EUROPEAN PATENT APPLICATION

(11) **EP 4 726 964 A2**
(43) Date of publication of application: **15.04.2026**
(21) Application number: 25206677.4
(22) Date of filing: 03.10.2025
(51) Int. Cl.: H02J 7/62, H02J 7/64, H02J 7/60, H02H 7/18, H01M 10/42

(54) **BATTERY PROTECTION CIRCUIT MODULE AND METHOD OF PROTECTING BATTERY USING THE SAME**

(30) Priority: 08.10.2024 KR 20240137178
(71) Applicant: SAMSUNG SDI CO., LTD., Yongin-si, Gyeonggi-do 17084 (KR)
(72) Inventor: PARK, Seokryun, Yongin-si (KR)
(74) Representative: Marks & Clerk LLP

(57) **Abstract**

The present disclosure relates to a battery protection circuit module and a method of protecting a battery using the same, and more particularly, to a battery protection circuit module that prevents an overvoltage protection malfunction and a method of protecting a battery using the same. A battery protection circuit module may include a first integrated circuit (IC) disposed relatively closely to an output stage, a first field effect transistor (FET) connected to the first IC, a second IC disposed relatively closely to an input stage, a second FET connected to the second IC, and a first shunt resistor disposed at a preset node by considering a difference between voltages recognized by the first IC due to a second shunt resistor and the second FET that are connected to the second IC.

## Description

### BACKGROUND

### 1. Technical Field

The present disclosure relates to a battery protection circuit module and a method of protecting a battery using the same, and more particularly, to a battery protection circuit module that prevents an overvoltage protection malfunction and a method of protecting a battery using the same.

### 2. Related Art

A circuit design in which a shunt resistor part is disposed around a plurality of integrated circuits (ICs) and field effect transistors (FETs) has a problem in that a difference between overvoltage protection (OVP) operation voltages and a difference between under voltage protection (UVP) operation voltages occurs because a difference between voltages that are recognized by an IC disposed in a pack output stage occurs due to impedance of the FET and the shunt resistor part upon high current charging.

### SUMMARY

Embodiments of the present disclosure are directed to providing a battery protection circuit module capable of solving an overvoltage protection operation issue according to the occurrence of a difference between voltages that are recognized by an IC at an output stage due to impedance of an FET disposed in a cell input stage and a shunt resistor part, and a method of protecting a battery using the same.

A battery protection circuit module according to embodiments of the present disclosure may include a first integrated circuit (IC) disposed relatively closely to an output stage, a first field effect transistor (FET) connected to the first IC, a second IC disposed relatively closely to an input stage, a second FET connected to the second IC, and a first shunt resistor disposed at a preset node by considering a difference between voltages recognized by the first IC due to a second shunt resistor and the second FET that are connected to the second IC.

The first shunt resistor may be disposed at the preset node by considering a difference between voltages attributable to impedance of the second shunt resistor and the second FET.

The first shunt resistor may be disposed at the preset node determined to be a front end of a cell input stage and may be connected to the first IC and the first FET.

The first IC may be configured to check overcharging prohibition voltage setting information for cell protection through a voltage sensing terminal.

The first IC may be configured to detect a voltage across the first shunt resistor, and may be configured to perform an overcharging prohibition operation when a high current within a preset range flows.

A battery protection circuit module according to another aspect of the present disclosure may include a first IC disposed relatively closely to an output stage, a first field effect transistor (FET) connected to a first integrated circuit (IC), a first shunt resistor connected to the first IC and the first FET, a second IC disposed relatively closely to an input stage, a second FET connected to the second IC, a second shunt resistor connected to the second IC and the second FET, and a voltage comparator disposed at a preset node and configured to prevent an overcharging prohibition-related malfunction attributable to impedance of the second FET and the second shunt resistor.

The voltage comparator may be disposed at a preset node between the first IC and the second IC, and may be configured to check a voltage level of the present node.

The voltage comparator may be configured to store reference specifications related to a difference between voltages according to the impedance of the second FET and the second shunt resistor.

The voltage comparator may be configured to change and store the reference specifications based on a reference value for an occurrence of an overcharging prohibition-related malfunction.

The voltage comparator may be configured to detect a situation in which a high current within a preset range flows by checking whether a difference between voltages, which exceeds the reference specifications, occurs based on the results of the check of the voltage level.

The voltage comparator may be configured to prevent an overcharging prohibition malfunction of the first IC by using a signal wire with the second shunt resistor through a switching operation when the high current within the preset range flows.

A method of protecting a battery according to embodiments of the present disclosure may include steps of (a) starting a voltage difference reduction design related to an overvoltage prohibition malfunction, (b) determining at least any one of a node at which a shunt resistor is disposed and a node at which a voltage comparator is disposed within the battery protection circuit module, and (c) disposing the battery protection circuit module including the shunt resistor or the voltage comparator and preventing the overvoltage prohibition malfunction.

The step (a) may include performing the voltage difference reduction design by considering a voltage difference attributable to impedance of the FET and the shunt resistor that are included in the battery protection circuit module and that are disposed relatively closely to an input stage.

The step (a) may include determining reference specifications for the voltage difference.

The step (b) may include determining a node at which a first shunt resistor is disposed, which is connected to a first IC and a first FET disposed relatively closely to an output stage when a node at which the shunt resistor is disposed is determined.

The step (b) may include determining the node at which the first shunt resistor is disposed as a front end of a cell input stage.

The step (c) may include checking setting information related to an overcharging prohibition voltage through a voltage sensing terminal of the first IC, detecting a flow of a high current within a preset range by detecting a voltage across the first shunt resistor, and performing an overcharging prohibition operation.

The step (b) may include determining a node at which the voltage comparator is disposed as a preset node between a first IC disposed relatively closely to an output stage and a second IC disposed relatively closely to an input stage when the node at which the voltage comparator is disposed is determined.

The step (c) may include disposing the voltage comparator at the node at which the voltage comparator is disposed, disposing a first shunt resistor and a second shunt resistor at both ends of the voltage comparator, and disposing the second shunt resistor at a front end of a cell input stage compared to the first shunt resistor.

The step (c) may include detecting a situation in which a high current within a preset range flows based on the results of the check of a voltage level of the node.

The step (c) may include preventing an overcharging prohibition malfunction of the first IC by using a signal wire with the second shunt resistor.

According to embodiments of the present disclosure, it is possible to reinforce the sensing of an operating voltage by an IC disposed in the output stage by adjusting the location at which the shunt resistor part is disposed and to solve a problem in that an overvoltage protection operation is performed at a low cell voltage for a charging prohibition operating voltage.

According to embodiments of the present disclosure, when rapid high current charging conditions are recognized compared to the typical charging current within a preset range, the occurrence of a difference between voltages attributable to impedance is reduced through the results of a voltage comparison and the switching of the shunt resistor signal wire. It is possible to improve operational reliability because an overvoltage protection operation is not performed at a low cell voltage for a charging prohibition operating voltage.

At least some of the above and other features of the invention are set out in the claims.

### BRIEF DESCRIPTION OF THE DRAWINGS

The following drawings attached to this specification illustrate preferred embodiments of the present disclosure, and help to further understand the technical scope of the present disclosure along with the aforementioned contents of the disclosure. Accordingly, the present disclosure should not be construed as being limited to only contents described in such drawings:
FIG. 1 schematically illustrates an electrode assembly of a secondary battery;
FIG. 2 schematically illustrates a configuration of a pouch-type secondary battery;
FIG. 3 illustrates a schematic external appearance configuration of a prismatic secondary battery;
FIG. 4 is a cross-sectional view of a cylindrical secondary battery;
FIG. 5 illustrates a battery protection circuit module according to embodiments of the present disclosure.
FIG. 6 illustrates a battery protection circuit module according to another embodiment of the present disclosure.
FIGS. 7 and 8 illustrate overvoltage protection (OVP) voltages for each temperature according to the specifications of a conventional technology and the battery protection circuit module according to embodiments of the present disclosure.
FIG. 9 illustrates a method of protecting a battery according to embodiments of the present disclosure.
FIG. 10 is a block diagram illustrating a computer system for implementing a method according to an example embodiment of the present disclosure;
FIG. 11 is an example view of a secondary battery module in which secondary batteries manufactured according to examples of the present disclosure are arranged;
FIG. 12 is an example view of a secondary battery pack including the secondary battery module illustrated in FIG. 11; and
FIG. 13 is a conceptual view of a vehicle including the secondary battery pack illustrated in FIG. 12.
Fig. 14 illustrates a method of charging a secondary battery.

### Detailed description

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their invention in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C", "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this invention.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

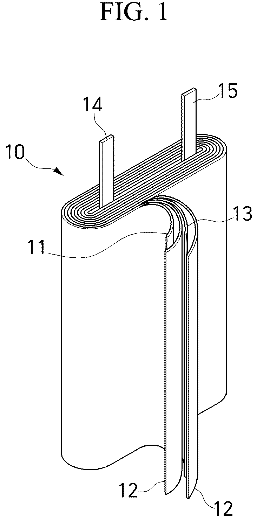

FIG. 1 schematically illustrates an electrode assembly built in a case of a secondary battery.

An electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction (e.g., the y direction) of a case 59. In other example embodiments, the electrode assembly 10 may be a stack type rather than a winding type, and the shape of the electrode assembly 10 is not limited in the examples of the present disclosure. In addition, the electrode assembly 10 may be or include a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the examples of the present disclosure. The first electrode plate 11 of the electrode assembly may act as a negative electrode, and the second electrode plate 13 may act as a positive electrode. In examples, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode tab 14 may be connected to an external first terminal (not shown). In some example embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than, e.g., farther than or beyond, the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region to which the second electrode active material is not applied. The second electrode tab 15 may be connected to an external second terminal (not shown). In some example embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than, e.g., farther than or beyond, the separator 12 without being separately cut.

In some example embodiments, the first electrode tab 14 may be located on the left side of the electrode assembly 10, and the second electrode tab 15 may be located on the right side of the electrode assembly 10. In other example embodiments, the first electrode tab 14 and the second electrode tab 15 may be located on one side of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 hinders or substantially prevents a short-circuit between the first electrode 11 and the second electrode 13 while allowing movement of lithium ions therebetween. The separator 12 may be made of or include, for example, a polyethylene film, a polypropylene film, a polyethylene-polypropylene film, etc.

In some example embodiments, the electrode assembly 10 may be accommodated in the case (not shown) along with an electrolyte. In the case of a pouch-type secondary battery, an electrode assembly 10 may be accommodated in a pouch made of or including flexible material in the form illustrated in FIG. 1. In the case of a prismatic secondary battery, an electrode assembly 10 may be accommodated in a prismatic metal casing in the form illustrated in FIG. 1.

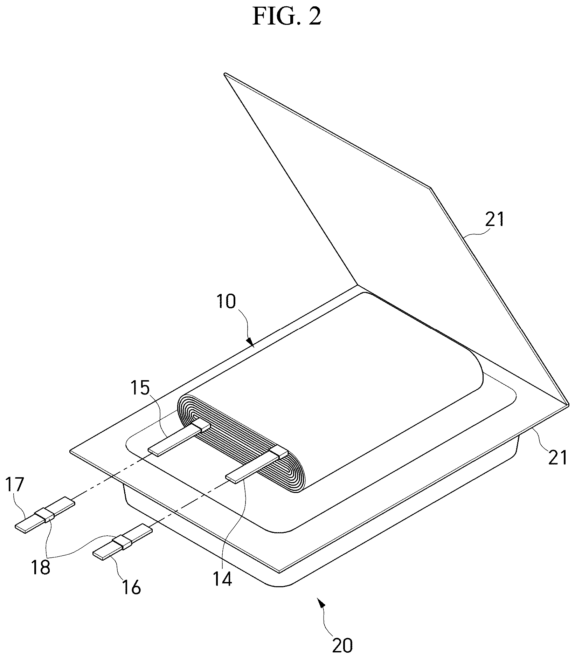

FIG. 2 schematically illustrates the pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16 and 17 by ,e.g., welding or other attaching method that preserves conductivity therebetween. At least a portion of each of the first terminal lead 16 and the second terminal lead 17 may be attached or covered with a tab film 18 for insulation from the pouch 20.

The pouch 20 may be sealed by having sealing parts 21 at the edges thereof come into contact with each other while accommodating or containing the electrode assembly 10 therein, in which case the sealing may be achieved with the tab film 18 interposed between the sealing parts 21. The sealing parts 21 of the pouch 20 may be made of or include a thermal fusion material that generally has weak adhesion to metal. Thus, it may be fused to the pouch 20 by interposing the thin tab film 18 between the sealing parts 21.

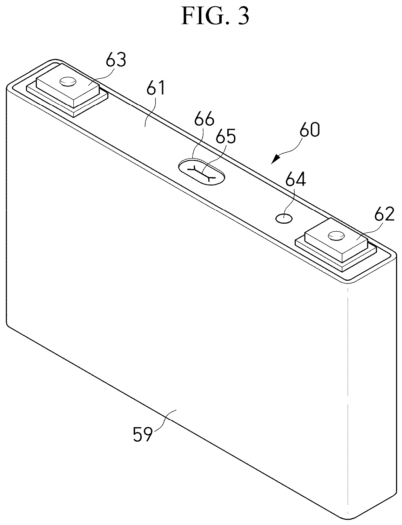

FIG. 3 illustrates a schematic external appearance configuration of a prismatic secondary battery.

A prismatic case 59 defines an overall appearance of the prismatic secondary battery, and may be made of or include a conductive metal, such as aluminum, aluminum alloy, or nickel-plated steel. In addition, the case 59 may provide a space for accommodating or containing the electrode assembly 10 therein.

A cap assembly 60 may include a cap plate 61 that covers an opening of the case 59, and the case 59 and the cap plate 61 may be made of or include a conductive material. A first terminal 63 and a second terminal 62 may be electrically connected to the first electrode tab 14 and the second electrode tab 15 of the electrode assembly 10 illustrated in FIGS. 1 and 2 inside the case 59, and may be installed to protrude outward through the cap plate 61.

The cap plate 61 may be equipped with or include an electrolyte injection port 64 configured to install a sealing plug therein, and a vent 66 formed that includes a notch 65 may be installed. The vent 66 is configured to discharge any gas generated inside the secondary battery.

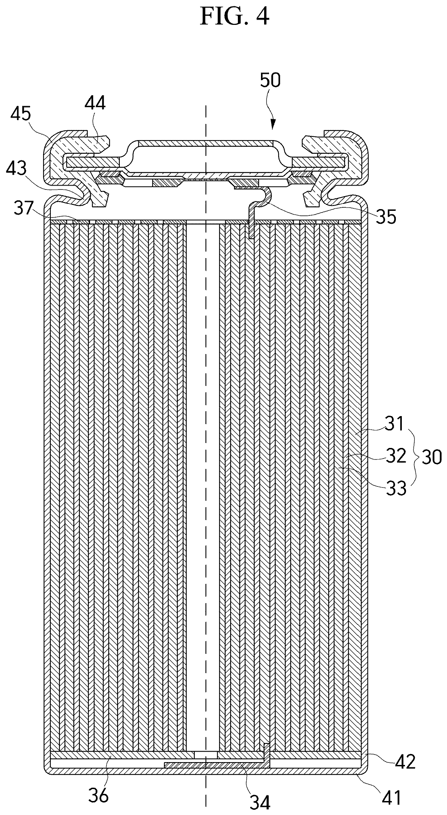

FIG. 4 is a cross-sectional view of a cylindrical secondary battery.

The cylindrical secondary battery includes an electrode assembly 30, a case accommodating the electrode assembly 30 and an electrolyte therein, a cap assembly 50 coupled to an opening of the case to seal the case, and an insulating plate 37 located between the electrode assembly 30 and the cap assembly 50 inside the case.

The electrode assembly 30 may include a separator 32 between a first electrode 33 and a second electrode 31, and the electrode assembly 30 may be wound in a jelly-roll form.

The first electrode 33 may include a first substrate and a first active material layer located on the first substrate. A first lead tab 35 may extend outward from a first uncoated portion of the first substrate where the first active material layer is not located, and may be electrically connected to the cap assembly 50.

The second electrode 31 may include a second substrate and a second active material layer located on the second substrate. A second lead tab 34 may extend outward from a second uncoated portion of the second substrate where the second active material layer is not located, and may be electrically connected to the case. The first lead tab 35 and the second lead tab 34 may extend in opposite directions with respect to each other.

The first electrode 33 may constitute a positive electrode. In this case, the first substrate may be composed of or include, for example, aluminum foil, and the first active material layer may include, for example, a transition metal oxide. The second electrode 31 may constitute a negative electrode. In this case, the second substrate may be composed of or include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or include, for example, at least one of a polyethylene film, a polypropylene film, a polyethylene-polypropylene film, etc.

The case accommodates or contains the electrode assembly 30 and the electrolyte, and substantially forms the external appearance of the secondary battery together with the cap assembly 50. The case may have a substantially cylindrical body portion 42, and a bottom portion 41 connected to one side of the body portion 42. A beading part 43 deformed inwardly may be formed in the body portion 42, and a crimping part 45 bent inwardly may be formed at an open end of the body portion 42.

The beading part 43 may reduce or prevent movement of the electrode assembly 30 inside the case, and may facilitate seating of a gasket 44 and the cap assembly 50. A crimping part 45 may firmly fix the cap assembly 50 by pressing the edge of the cap assembly 50 against the gasket 44. The case may be formed of or include iron plated with nickel, for example.

The cap assembly 50 may be fixed to the inside of the crimping part 45 through the gasket 44 to seal the case. The cap assembly 50 may include a cap up, a safety vent, a cap down, an insulating member, and a subplate, but is not limited to this example and may be variously modified.

The cap up may be located at the very top of the cap assembly 50. The cap up may include a terminal portion that protrudes convexly upward and is connected to an external circuit, and an outlet for discharging gas may be located around the terminal portion.

The safety vent may be located below the cap up. The safety vent may include a protrusion that protrudes convexly downward and is connected to the subplate, and at least one notch located around the protrusion.

When gas is generated due to overcharging or abnormal operation of the secondary battery, the protrusion may be deformed upward by pressure and may separate from the subplate, while the safety vent may be cut along the notch. The cut safety vent may hinder or prevent the secondary battery from exploding by discharging gas to the outside.

The cap down may be located below the safety vent. The cap down may be formed with a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening of the cap down, and the protrusion of the safety vent may be fixed to the subplate. The first lead tab 35 pulled out from the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading portion 43 to be in contact with the electrode assembly 30, and may be provided with a tab opening for pulling out the first lead tab 35. The cap assembly 50, which is electrically connected to the first electrode 33 by the first lead tab 35, may face the electrode assembly 30 with the insulating plate 37 interposed therebetween, and may maintain an insulated state from the electrode assembly 30 by the insulating plate 37. On the other hand, another insulating plate 36 may be included for insulation between the electrode assembly 30 and the bottom portion 41 of the case.

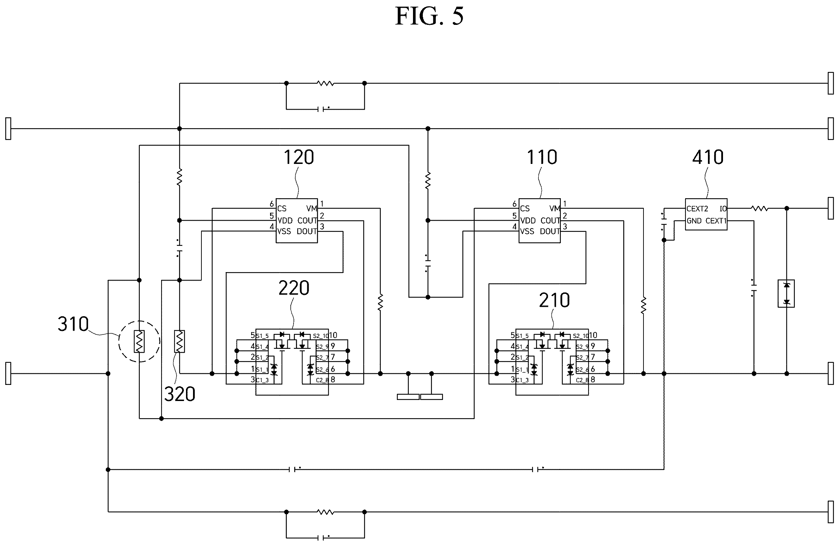

Hereinafter, prior to a description of embodiments of the present disclosure, problems of a model according to a conventional technology are described, and a battery protection circuit module and a method of protecting a battery according to embodiments of the present disclosure are described with reference to FIGS. 5 to 10.

According to the conventional technology, a first IC and a first FET may be disposed in an output stage. A second IC and a second FET may be disposed in an input stage. A shunt resistor part may be disposed around each IC and each FET.

Upon high current charging, a difference between voltages recognized by the first IC may occur due to impedance of the second FET and a second shunt resistor part.

A difference between voltages may occur due to resistance of the second shunt resistor and resistance of the second FET connected to the second shunt resistor in series. For example, upon charging of 8 A, a difference of about 28 mV may occur assuming that the second shunt resistor has resistance (1 mΩ) and the second FET has resistance (e.g., about a maximum of 2.5 mΩ).

A difference between voltages recognized by the first IC may occur due to impedance of the second FET and the second shunt resistor part. There is a problem in that an OVP operation is performed at a low cell voltage for a preset charging prohibition operating voltage OVP.

FIG. 5 illustrates a battery protection circuit module according to embodiments of the present disclosure.

The battery protection circuit module according to embodiments of the present disclosure may include a first IC 110 disposed relatively closely to an output stage, a first FET 210 connected to the first IC 110, a second IC 120 disposed relatively closely to the input stage, and second FET 220 connected to the second IC 120, and may include a first shunt resistor 310 disposed at a preset node by considering a difference between voltages that are recognized by the first IC 110 through the second FET 220.

The first shunt resistor 310 may be disposed at the preset node by considering a difference between voltages attributable to impedance of a second shunt resistor 320 and the second FET 220.

The first shunt resistor 310 may be disposed at a preset node determined to be a front end of a cell input stage, and may be connected to the first IC 110 and the first FET 210.

The first IC 110 may check overcharging prohibition voltage setting information for cell protection through a voltage sensing terminal.

The first IC 110 may detect a voltage across the first shunt resistor 310, and may perform an overcharging prohibition operation when a high current within a preset range flows.

According to embodiments of the present disclosure, it is possible to apply the battery protection circuit module to the same platform circuit design and to enable horizontal deployment because the first shunt resistor 310 is disposed at the preset node.

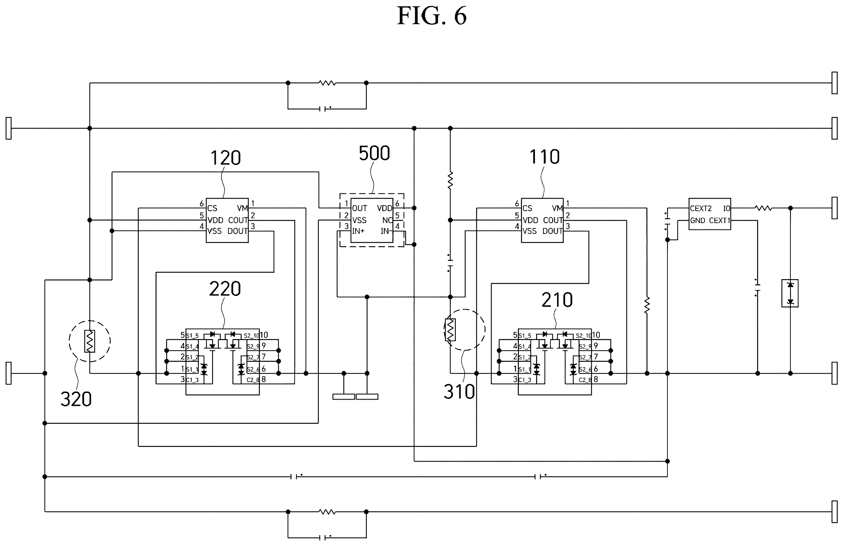

FIG. 6 illustrates a battery protection circuit module according to another embodiment of the present disclosure.

The battery protection circuit module according to another embodiment of the present disclosure may include a first IC 110 disposed relatively closely to an output stage, a first FET 210 connected to the first IC 110, and a first shunt resistor 310 connected to the first IC 110 and the first FET 210, and may include a second IC 120 disposed relatively closely to an input stage, a second FET 220 connected to the second IC 120, and a second shunt resistor 320 connected to the second IC 120 and the second FET 220, and may include a voltage comparator 500 disposed at a preset node in order to prevent an overcharging prohibition-related malfunction attributable to impedance of the second FET 220 and the second shunt resistor 320.

The voltage comparator 500 may be disposed at a preset node between the first IC 110 and the second IC 120, and may check a voltage level of the preset node.

The voltage comparator 500 may store reference specifications (e.g., 20 mv) related to a difference between voltages according to impedance of the second FET 220 and the second shunt resistor 320.

The voltage comparator 500 may detect a case in which a high current within a preset range flows, by checking whether a voltage difference that exceeds the reference specifications occurs as the results of the check of the voltage level.

When detecting the case in which the high current within the preset range flows, the voltage comparator 500 can prevent an overcharging prohibition malfunction of the first IC 110 by using a signal wire with the second shunt resistor 320 through a switching operation.

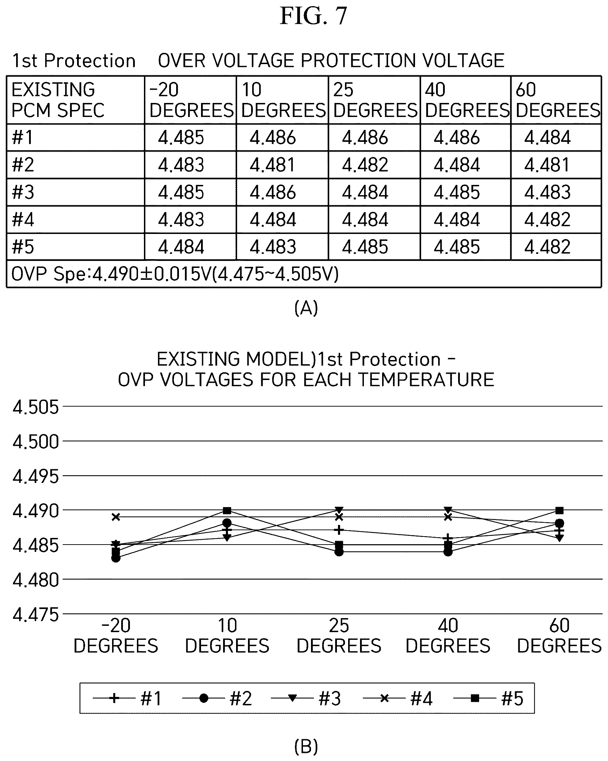

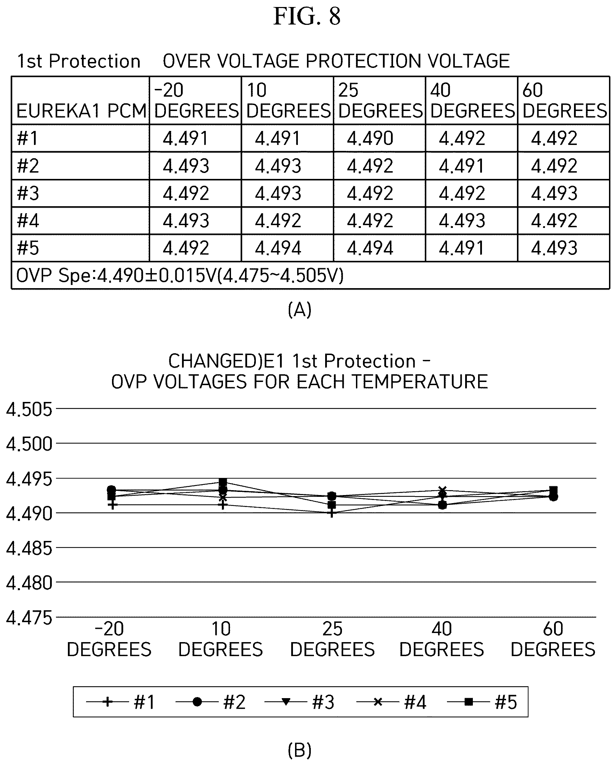

FIGS. 7 and 8 illustrate overvoltage protection (OVP) voltages for each temperature according to the specifications of a conventional technology and the battery protection circuit module according to embodiments of the present disclosure.

Referring to FIGS. 7 and 8, the OVP voltage specifications may be set to 4.490 ±0.015 V and 4.475 to 4.505 V.

Referring to FIG. 7, in a conventional protection circuit module (PCM), in a first module, an OVP voltage of 4.485 V was checked at -20 degrees, an OVP voltage of 4.486 V was checked at 10 degrees, an OVP voltage of 4.486 V was checked at 25 degrees, an OVP voltage of 4.486 V was checked at 40 degrees, and an OVP voltage of 4.484 V was checked at 60 degrees. In a second module, an OVP voltage of 4.483 V was checked at -20 degrees, an OVP voltage of 4.481 V was checked at 10 degrees, an OVP voltage of 4.482 V was checked at 25 degrees, an OVP voltage of 4.484 V was checked at 40 degrees, and an OVP voltage of 4.481 V was checked at 60 degrees. In a third module, an OVP voltage of 4.485 V was checked at -20 degrees, an OVP voltage of 4.486 V was checked at 10 degrees, an OVP voltage of 4.484 V was checked at 25 degrees, an OVP voltage of 4.485 V was checked at 40 degrees, and an OVP voltage of 4.483 V was checked at 60 degrees. In a fourth module, an OVP voltage of 4.483 V was checked at - 20 degrees, an OVP voltage of 4.484 V was checked at 10 degrees, an OVP voltage of 4.484 V was checked at 25 degrees, an OVP voltage of 4.483 V was checked at 40 degrees, and an OVP voltage of 4.482 V was checked at 60 degrees. In a fifth module, an OVP voltage of 4.484 V was checked at -20 degrees, an OVP voltage of 4.483 V was checked at 10 degrees, an OVP voltage of 4.485 V was checked at 25 degrees, an OVP voltage of 4.484 V was checked at 40 degrees, and an OVP voltage of 4.482 V was checked at 60 degrees.

Referring to FIG. 8, in the battery protection circuit module according to embodiments of the present disclosure, in a first module, an OVP voltage of 4.491 V was checked at -20 degrees, an OVP voltage of 4.491 V was checked at 10 degrees, an OVP voltage of 4.490 V was checked at 25 degrees, an OVP voltage of 4.492 V was checked at 40 degrees, and an OVP voltage of 4.492 V was checked at 60 degrees. In a second module, an OVP voltage of 4.493 V was checked at -20 degrees, an OVP voltage of 4.493 V was checked at 10 degrees, an OVP voltage of 4.492 V was checked at 25 degrees, an OVP voltage of 4.491 V was checked at 40 degrees, and an OVP voltage of 4.492 V was checked at 60 degrees. In a third module, an OVP voltage of 4.492 V was checked at -20 degrees, an OVP voltage of 4.493 V was checked at 10 degrees, an OVP voltage of 4.492 V was checked at 25 degrees, an OVP voltage of 4.493 V was checked at 40 degrees, and an OVP voltage of 4.492 V was checked at 60 degrees. In a fourth module, an OVP voltage of 4.493 V was checked at -20 degrees, an OVP voltage of 4.492 V was checked at 10 degrees, an OVP voltage of 4.492 V was checked at 25 degrees, an OVP voltage of 4.493 V was checked at 40 degrees, and an OVP voltage of 4.492 V was checked at 60 degrees. In a fifth module, an OVP voltage of 4.492 V was checked at -20 degrees, an OVP voltage of 4.494 V was checked at 10 degrees, an OVP voltage of 4.491 V was checked at 25 degrees, an OVP voltage of 4.491 V was checked at 40 degrees, and an OVP voltage of 4.493 V was checked at 60 degrees.

Referring to FIGS. 7 and 8, it may be seen that a deviation between battery OVP voltages for each temperature in the battery protection circuit module according to embodiments of the present disclosure is improved significantly and more tightly, compared to the conventional battery protection circuit module.

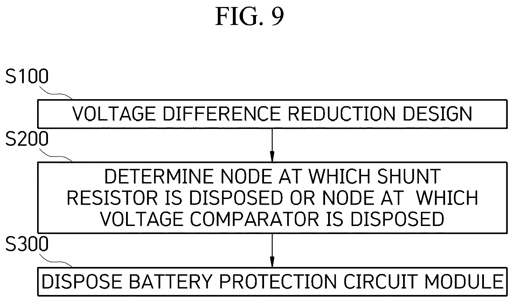

FIG. 9 illustrates a method of protecting a battery according to embodiments of the present disclosure.

The method of protecting a battery according to embodiments of the present disclosure may include step S100 of starting a voltage difference reduction design related to a voltage prohibition malfunction, step S200 of determining at least any one of a node at which the shunt resistor is disposed and a node at which the voltage comparator is disposed within the battery protection circuit module, and step S300 of disposing the battery protection circuit module including the shunt resistor or the voltage comparator and preventing an overvoltage prohibition malfunction.

Step S100 may include performing the voltage difference reduction design by considering a voltage difference attributable to impedance of the FET and the shunt resistor that are included within the battery protection circuit module and disposed relatively closely to the input stage.

Step S100 may include determining reference specifications for the voltage difference.

Step S200 may include determining a node at which the first shunt resistor connected to the first IC and the first FET that are disposed relatively closely to the output stage is disposed when the node at which the shunt resistor is disposed is determined.

Step S200 may include determining the node at which the first shunt resistor is disposed as the front end of the cell input stage.

Step S300 may include checking setting information related to an overcharging prohibition voltage through the voltage sensing terminal of the first IC, detecting a flow of a high current within a preset range by detecting a voltage across the first shunt resistor, and performing an overcharging prohibition operation.

Step S200 may include determining the node at which the voltage comparator is disposed as a preset node between the first IC disposed relatively closely to the output stage and the second IC disposed relatively closely to the input stage when the node at which the voltage comparator is disposed is determined.

Step S300 may include disposing the voltage comparator at the node at which the voltage comparator is disposed, disposing the first shunt resistor and the second shunt resistor at both ends of the voltage comparator, and disposing the second shunt resistor at the front end of the cell input stage compared to the first shunt resistor.

Step S300 may include detecting a situation in which a high current within a preset range flows based on the results of the check of a voltage level of the node.

Step S300 may include preventing an overcharging prohibition malfunction of the first IC by using a signal wire with the second shunt resistor.

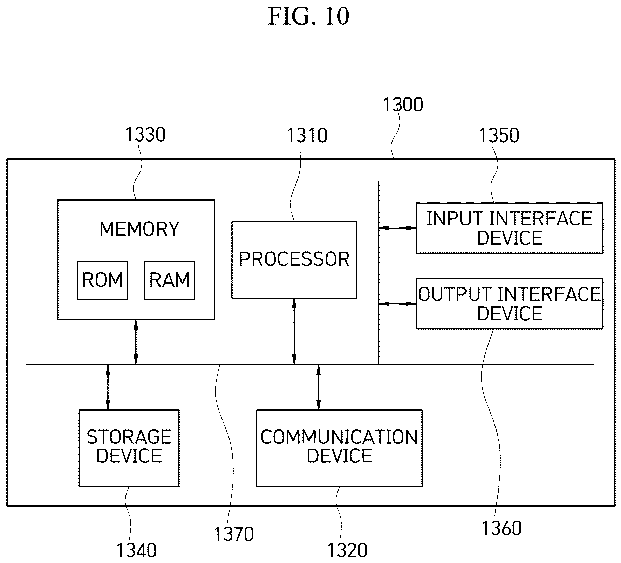

FIG. 10 is a block diagram illustrating a computer system for implementing the method according to embodiments of the present disclosure.

Referring to FIG. 10, the computer system 1300 may include at least one of a processor 1310, a memory 1330, an input interface device 1350, an output interface device 1360, and a storage device 1340 communicating with one another through a bus 1370. The computer system 1300 may also include a communication device 1320 coupled to a network. The processor 1310 may be or include a central processing unit (CPU) or a semiconductor device that executes instructions stored in the memory 1330 or in the storage device 1340. The memory 1330 and the storage device 1340 may include various types of volatile or nonvolatile storage media. For example, the memory may include a read-only memory (ROM) and a random access memory (RAM). In example embodiments of the present disclosure, the memory may be located inside or outside the processor, and may be connected to the processor through various known means. The memory is or includes various types of volatile or nonvolatile storage media, and for example, may include a read-only memory (ROM) or a random access memory (RAM).

Accordingly, example embodiments of the present disclosure may be implemented as a method implemented in a computer or a non-transitory computer-readable medium storing computer-executable instructions. In an example embodiment, when executed by the processor, computer-readable instructions may perform a method according to at least one aspect of the present disclosure.

The communication device 1320 may transmit or receive wired signals or wireless signals.

Additionally, the method according to an example embodiment of the present disclosure may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for the example embodiments of the present disclosure, or may be known and usable by those skilled in the art of computer software. Computer-readable recording media may include a hardware device configured to store and perform program instructions. For example, the computer-readable recording media may be or include magnetic media such as hard disks, floppy disks, and magnetic tapes, optical media such as CD-ROMs and DVDs, magneto-optical media such as floptical disks, ROM, RAM, flash memory, etc. The program instructions may include not only machine language codes such as that generated by a compiler, but also high-level language codes that can be executed by a computer through an interpreter, etc.

The battery protection device according to embodiments of the present disclosure may include memory 1330 in which a program that designs the battery protection circuit module based on a voltage difference reduction design related to an overvoltage prohibition malfunction is stored and a processor 1310 that executes the program. The processor 1310 may determine at least any of the node at which the shunt resistor is disposed and the node at which the voltage comparator is disposed within the battery protection circuit module, may dispose the battery protection circuit module including the shunt resistor or the voltage comparator, and can prevent an overvoltage prohibition malfunction.

The processor 1310 may perform the voltage difference reduction design for the battery protection circuit module by considering a voltage difference attributable to impedance of the FET and the shunt resistor that are included within the battery protection circuit module and that is disposed relatively closely to the input stage.

The processor 1310 may determine reference specifications for a voltage difference, and may determine the node at which the first shunt resistor is disposed, which are connected to the first IC and the first FET disposed relatively closely to the output stage, in determining the node at which the shunt resistor is disposed. In this case, the processor 1310 may determine the node at which the first shunt resistor is disposed as the front end of the cell input stage.

The first IC may check setting information related to an overcharging prohibition voltage through the voltage sensing terminal, and may detect a flow of a high current within a preset range by detecting a voltage across the first shunt resistor, and may perform an overcharging prohibition operation.

The processor 1310 may determine the node at which the voltage comparator is disposed as a preset node between the first IC disposed relatively closely to the output stage and the second IC disposed relatively closely to the input stage when the node at which the voltage comparator is disposed is determined.

The processor 1310 may dispose the voltage comparator at the node at which the voltage comparator is disposed, may dispose the first shunt resistor and the second shunt resistor at both ends of the voltage comparator, and may dispose the second shunt resistor at the front end of the cell input stage compared to the first shunt resistor.

The processor 1310 may detect a situation in which a high current within a preset range flows based on the results of the check of a voltage level of the node through the voltage comparator, and can prevent an overcharging prohibition malfunction of the first IC by using a signal wire with the second shunt resistor.

Hereinafter, any material that may be usable for the secondary battery according to examples of the present disclosure will be described.

**As** the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiₐA_{1-b}X_{b}O_{2-c}D_{c} (0. 90≤a≤1.8, 0≤b≤0.5, 0≤c≤0.05) ; LiₐMn_{2-b}X_{b}O_{4-c}D_{c} (0. 90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

**A** negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

**As** the negative electrode current collector, at least one of copper foil, nickel foil, stainless steel foil, titanium foil, nickel foam, copper foam, conductive metal-coated polymer substrate, and combinations thereof may be used.

**An** electrolyte for a lithium secondary battery may include a non-aqueous organic solvent and a lithium salt.

The non-aqueous organic solvent may constitute a medium through which ions involved in the electrochemical reaction of the battery can move.

The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). As the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

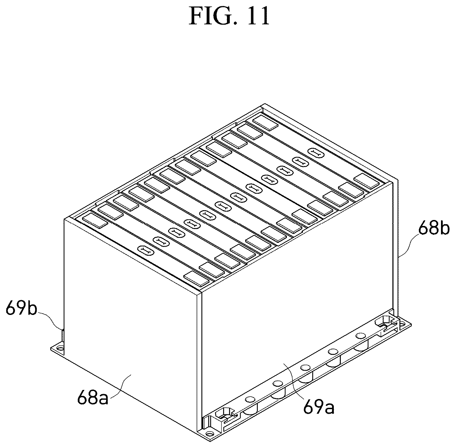

FIG. 11 is an illustration of a secondary battery module in which secondary batteries manufactured according to examples of the present disclosure are arranged. With the increase in secondary battery capacity for driving electric vehicles, and the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (direction) and number to obtain desired voltage and current specifications.

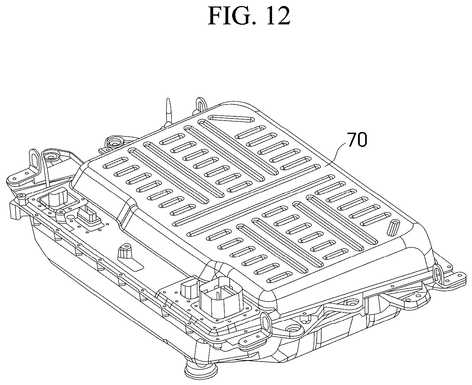

FIG. 12 is an illustration schematically showing the configuration of a battery pack 70 according to example embodiments of the present disclosure. Referring to FIG. 11, a battery pack 70 may include an assembly to which individual batteries are electrically connected, and a pack housing accommodating the same. In the drawings, for convenience of illustration, components including a bus bar, a cooling unit, external terminals for electrically connecting batteries, etc., are not shown.

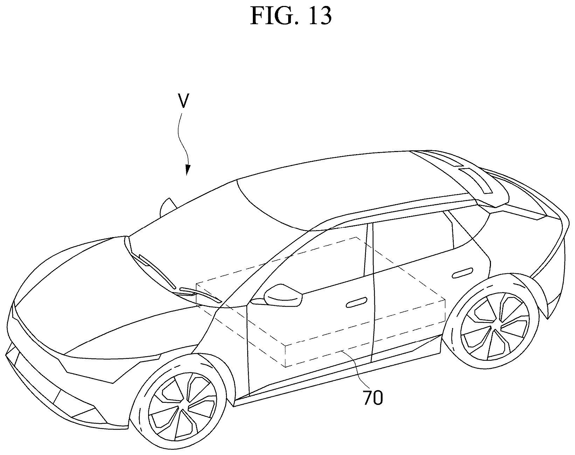

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 13 shows a vehicle V which includes the battery pack 70 shown in FIG. 12 on the lower body thereof. The vehicle V may operate by (e.g., may be powered by) receiving power from the battery pack 70.

According to examples of the present disclosure, considering that the typically high investment cost per unit of a density meter makes it relatively costly when installed in various areas of a drying furnace, and installation thereof inside the drying furnace is difficult in terms of size, a difference in an ultrasonic transmission state due to a density difference depending on the drying status of an electrode plate may be monitored through an ultrasonic sensor, and the amount of drying heat inside the drying furnace may be controlled in real-time based on the monitoring results. Accordingly, when an electrode plate composition or a loading level is changed after a job change, or the surrounding air temperature is changed due to seasonal effects, and the like, it is possible to greatly reduce the trials and errors in a process of optimizing electrode plate drying conditions at the beginning of a process, minimize loss of the electrode plate, and improve the productivity of drying furnace equipment and the overall efficiency of an electrode plate drying process.

However, effects that can be achieved through the present disclosure are not limited to the above-described effects, and other technical effects not mentioned will be clearly understood by those skilled in the art from the description of the invention described below.

Although the present disclosure has been described above with respect to example embodiments thereof, the present disclosure is not limited thereto. Various modifications and variations can be made thereto by those skilled in the art within the scope of the present disclosure and the equivalent scope of the appended claims.

A secondary battery can be charged and discharged, for example, according to the following method.

CCCV charging is a charging method in which constant current (CC) charging is performed until the voltage reaches a predetermined level, and then constant voltage (CV) charging is performed until the current flowing becomes small, specifically, until it reaches a termination current value.

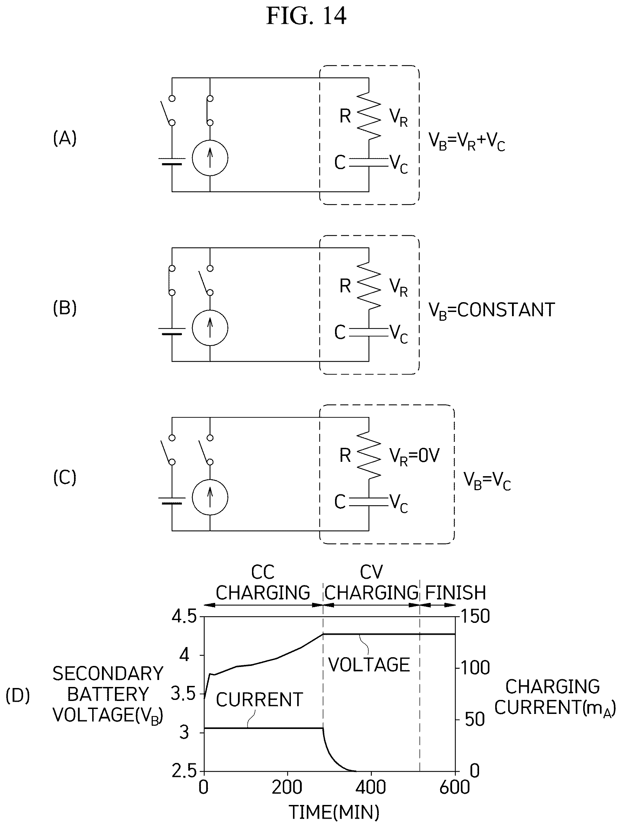

During the CC charging period, as shown in FIG. 14(A), the switch of the constant current power source is turned on, and the switch of the constant voltage power source is turned off, allowing a constant current I to flow through the secondary battery. In this period, since the current I is constant, the voltage VR applied to the internal resistance R is also constant, according to Ohm's law (VR = R × I). Meanwhile, the voltage VC applied to the capacity C of the secondary battery increases over time. Therefore, the battery voltage VB of the secondary battery also increases over time.

**When** the secondary battery voltage VB reaches a predetermined voltage, for example, 4.3V, the charging mode is switched from CC charging to CV charging. During CV charging, as shown in FIG. 14(B), the switch of the constant voltage power source is turned on and the switch of the constant current power source is turned off, so the battery voltage VB of the secondary battery remains constant. Meanwhile, the voltage VC applied to the capacity C of the secondary battery increases over time. Since VB = VR + VC must be satisfied, the voltage VR applied to the internal resistance R decreases over time. As the voltage VR applied to the internal resistance R decreases, the current I flowing through the secondary battery also decreases according to Ohm's law (VR = R × I).

When the current I flowing through the secondary battery reaches a predetermined current, for example, about 0.01C, the charging process is terminated. When the CCCV charging is completed, as shown in FIG. 14(C), all switches are turned off, and the current I becomes zero. Therefore, the voltage VR applied to the internal resistance R becomes 0V. However, since the voltage VR applied to the internal resistance R has already been sufficiently reduced by the CV charging, even if there is no further voltage drop across the internal resistance R, the secondary battery voltage VB hardly decreases.

FIG. 14 (D) shows an example of the secondary battery voltage VB and the charging current during the CCCV charging process and after the CCCV charging is completed. Even after the CCCV charging is completed, the secondary battery voltage VB hardly decreases.

Although the present invention has been described with reference to limited embodiments and drawings, the invention is not limited thereto, and various modifications and alterations can be made by those of ordinary skill in the art without departing from the scope of the invention as defined by the claims below.

## Claims

1. A battery protection circuit module comprising:
a first integrated circuit (IC) disposed relatively closely to an output stage;
a first field effect transistor (FET) connected to the first IC;
a second IC disposed relatively closely to an input stage;
a second FET connected to the second IC; and
a first shunt resistor disposed at a preset node by considering a difference between voltages recognized by the first IC due to a second shunt resistor and the second FET that are connected to the second IC.

2. The battery protection circuit module as claimed in claim 1, wherein the first shunt resistor is disposed at the preset node by considering a difference between voltages attributable to impedance of the second shunt resistor and the second FET.

3. The battery protection circuit module as claimed in claim 1 or claim 2, wherein the first shunt resistor is disposed at the preset node determined to be a front end of a cell input stage and is connected to the first IC and the first FET.

4. The battery protection circuit module as claimed in any preceding claim, wherein the first IC is configured to check overcharging prohibition voltage setting information for cell protection through a voltage sensing terminal.

5. The battery protection circuit module as claimed in any preceding claim, wherein the first IC is configured to detect a voltage across the first shunt resistor, and to perform an overcharging prohibition operation when a high current within a preset range flows.

6. A battery protection circuit module comprising:
a first integrated circuit IC disposed relatively closely to an output stage;
a first field effect transistor (FET) connected to the first IC;
a first shunt resistor connected to the first IC and the first FET;
a second IC disposed relatively closely to an input stage;
a second FET connected to the second IC;
a second shunt resistor connected to the second IC and the second FET; and
a voltage comparator disposed at a preset node and configured to prevent an overcharging prohibition-related malfunction attributable to impedance of the second FET and the second shunt resistor.

7. The battery protection circuit module as claimed in claim 6, wherein the voltage comparator is disposed at a preset node between the first IC and the second IC and is configured to check a voltage level of the preset node.

8. The battery protection circuit module as claimed in claim 7, wherein the voltage comparator is configured to store reference specifications related to a difference between voltages according to the impedance of the second FET and the second shunt resistor.

9. The battery protection circuit module as claimed in claim 8, wherein the voltage comparator is configured to change and store the reference specifications based on a reference value for an occurrence of an overcharging prohibition-related malfunction.

10. The battery protection circuit module as claimed in claim 8 or claim 9, wherein the voltage comparator is configured to detect a situation in which a high current within a preset range flows by checking whether a difference between voltages, which exceeds the reference specifications, occurs based on results of the check of the voltage level.

11. The battery protection circuit module as claimed in claim 10, wherein the voltage comparator is configured to prevent an overcharging prohibition malfunction of the first IC by using a signal wire with the second shunt resistor through a switching operation when the high current within the preset range flows.

12. A method of protecting a battery, which is performed by a battery protection circuit module, the method comprising steps of:
(a) starting a voltage difference reduction design related to an overvoltage prohibition malfunction;
(b) determining at least any one of a node at which a shunt resistor is disposed and a node at which a voltage comparator is disposed within the battery protection circuit module; and
(c) disposing the battery protection circuit module comprising the shunt resistor or the voltage comparator and preventing the overvoltage prohibition malfunction.

13. The method as claimed in claim 12, wherein the step (a) comprises performing the voltage difference reduction design by considering a voltage difference attributable to impedance of the FET and the shunt resistor that are included in the battery protection circuit module and that are disposed relatively closely to an input stage;
optionally wherein the step (a) comprises determining reference specifications for the voltage difference.

14. The method as claimed in claim 12 or claim 13, wherein the step (b) comprises determining a node at which a first shunt resistor is disposed, which is connected to a first IC and a first FET disposed relatively closely to an output stage when a node at which the shunt resistor is disposed is determined;
optionally wherein the step (b) comprises determining the node at which the first shunt resistor is disposed as a front end of a cell input stage;
further optionally wherein the step (c) comprises checking setting information related to an overcharging prohibition voltage through a voltage sensing terminal of the first IC, detecting a flow of a high current within a preset range by detecting a voltage across the first shunt resistor, and performing an overcharging prohibition operation.

15. The method as claimed in any of claims 12-14, wherein the step (b) comprises determining a node at which the voltage comparator is disposed as a preset node between a first IC disposed relatively closely to an output stage and a second IC disposed relatively closely to an input stage when the node at which the voltage comparator is disposed is determined;
optionally wherein the step (c) comprises disposing the voltage comparator at the node at which the voltage comparator is disposed, disposing a first shunt resistor and a second shunt resistor at both ends of the voltage comparator, disposing the second shunt resistor at a front end of a cell input stage compared to the first shunt resistor, and detecting a situation in which a high current within a preset range flows based on results of the check of a voltage level of the node;
further optionally wherein the step (c) comprises preventing an overcharging prohibition malfunction of the first IC by using a signal wire with the second shunt resistor.
